Europäisches Patentamt

European Patent Office

Office européen des brevets

(11) Veröffentlichungsnummer: **0 400 198**
**A1**

## (12) EUROPÄISCHE PATENTANMELDUNG

(21) Anmeldenummer: **89110051.3**

(22) Anmeldetag: **02.06.89**

(51) Int. Cl.⁵: **E01D 19/06, E01D 19/04, F16F 1/38**

(43) Veröffentlichungstag der Anmeldung:
**05.12.90 Patentblatt 90/49**

(84) Benannte Vertragsstaaten:
**AT BE CH DE FR GB IT LI NL SE**

(71) Anmelder: **Friedrich Maurer Söhne GmbH & Co. KG**
**Frankfurter Ring 193**
**D-8000 München 44(DE)**

(72) Erfinder: **Buckenauer, Günter**
**Ulmenstrasse 2**
**D-8011 Baldham(DE)**

(74) Vertreter: **Bockhorni, Josef, Dipl.-Ing. et al**
**Patentanwälte Herrmann-Trentepohl, Kirschner, Grosse, Bockhorni Forstenrieder Allee 59**
**D-8000 München 71(DE)**

(54) **Vorrichtung zur federnden Einspannung von Traversen einer Fahrbahnüberbrückungskonstruktion.**

(57) Bei einer Vorrichtung zur federnden Einspannung von Traversen einer Fahrbahnüberbrückungskonstruktion in einem Traversenkasten, auf denen mindenstens eine Lamelle gelagert ist, wobei ein Federlagerelement als Gleitlager ausgebildet ist und aus mindestens zwei Lagerteilen (17,18) besteht, zwischen denen und um diese herum eine zusammenhängende Gummischicht (19,20) aufvulkanisiert und auf der das erste Lagerteil bedeckenden Gummischicht eine Gleitschicht (22) aufgebracht ist, mit einer Vorrichtung (23,24) zur Arretierung des Federlagerelements am Traversenkasten, ist erfindungsgemäß vorgesehen, daß mindestens ein Lagerteil (17) als Rotationskörpersegment und das diesem gegenüberliegende Lagerteil (18) als eine dem Rotationskörpersegment komplementäre Lagerpfanne ausgebildet ist.

Fig. 2

## Vorrichtung zur federnden Einspannung von Traversen einer Fahrbahnüberbrückungskonstruktion

Die Erfindung betrifft eine Vorrichtung zur federnden Einspannung von Traversen einer Fahrbahnüberbrückungskonstruktion gemäß dem Oberbegriff des Anspruchs 1.

Im Brückenbau, aber auch im Hochstraßen- und im Hochbau, sind zum Ausgleich temperatur- oder belastungsbedingter positiver und negativer Dehnungen in den Fahrbahnen Bewegungsfugen erforderlich. Bei größeren Dehnungen muß der Gesamtfugenspalt in zwei oder mehr überfahrbare kleinere Spalten aufgeteilt werden. Dies geschieht durch die Verlegung von Lamellen, die untereinander und mit den jeweiligen Randbereichen der aufeinanderzuweisenden Fahrbahnkanten durch Dichtprofile verbunden sind, die durch Einfalten die Bewegungen der Fugenränder aufnehmen.

Je eine der Lamellen ruht auf je einer in Fahrbahnrichtung angeordneten Traverse, wobei die Traversen in einen Traversenkasten eingespannt sind. Der Traversenkasten besteht aus zwei zueinander symmetrischen Teilen, die im Beton zweier hintereinander liegender Brückenüberbauten bzw. eines Brückenüberbaus und eines Brückenwiderlagers angeordnet sind. Die Traversen reichen mit ihren Enden in jeweils einen Traversenkastenteil hinein.

Jede Traverse ruht auf Federlagerelementen, die sich gegen das Bodenblech des jeweiligen Traversenkastens abstützen. Obere Federlagerelemente ruhen auf der oberen Traversenfläche und stützen sich gegen das Deckenblech des Traversenkastens ab.

Zur Arretierung der Federlagerelemente am Traversenkasten sind Zapfen vorgesehen, die eine formschlüssige Verbindung zwischen Lagerelement und Kasten herstellen. Bei bekannten Vorrichtungen ist der Zapfen am Lager selbst befestigt. Die Traverse muß vor dem Einbau des Lagers soweit angehoben werden, daß Lager und Zapfen zwischen Traverse und Bodenblech passen. Das führt dazu, daß die obere Gleitfeder erheblich zusammengedrückt werden muß, wodurch die Feder stark ausbaucht. Beim Ausbauchen legt sich die ausgebauchte Fläche gegen eine vorhandene Seitenwand des Traversenkastens, und die untere Platte der Feder wird von der Seitenwand weggeschoben. Beim Zusammenpressen der Gleitfeder treten derart hohe Kräfte auf, daß sich die Oberseite der Traverse evtl. in die Gleitschicht aus PTFE eindrückt. Beim Einrasten des Zapfens in die Kastenbohrung wird die obere Gleitfeder wieder entlastet.

Es ist im Stand der Technik eine Vorrichtung zur Einspannung einer Traverse der eingangs genannten Art bekannt, bei der ein Federlagerelement verwendet wird, bei dem eine erste ebene Metallplatte mit einer zweiten ebenen Metallplatte durch eine zwischenvulkanisierte Gummischicht miteinander verbunden ist. Auf der freien Fläche einer Metallplatte des Lagers ist eine Gleitschicht aus PTFE angeordnet. Die Federlagerelemente haben folgende Aufgaben:

Es werden während des Kontaktes zwischen dem Rad eines über die Bewegungsfuge fahrenden Fahrzeugs und der oder den Lamellen innerhalb sehr kurzer Zeit Belastungen in die Fugenkonstruktion eingeleitet. Die Lagerung der Fugenkonstruktion ist daher so auszubilden, daß die durch die dynamische Belastung ausgelösten Massenkräfte gedämpft in die Verankerung und den Unterbau abgegeben werden. Das wird durch die oben beschriebenen Federlagerelemente erreicht. Durch Vertikalbewegungen, die z.B. bei Brücken mit Längsgefälle durch Wärmeeinflüsse und Kriechen und Schwinden des Überbaus auftreten können oder Verdrehungen, die z. B. bei Durchbiegungen des Überbaus unter Verkehrslasten oder Pfeilersenkungen auftreten können eines Fugenrandes und damit einer Traversenkastenhälfte relativ zur gegenüberliegenden kommt es zu Kippbewegungen der Traversen auf den Federlagerelementen. Damit die Traverse immer vollflächig auf der Gleitschicht des Federlagerelementes aufliegt bzw. keine zu große Kantenpressung entsteht, muß das Rückstellmoment des Federlagerelementes klein sein. Durch einen klaffenden Spalt zwischen der Traverse und der Gleitschicht des Lagerelementes können Schlaggeräusche entstehen, wenn unter der Fahrzeuglast das Rückstellmoment überwunden wird und die Traverse auf die Lagergleitschicht aufschlägt. Außerdem kann in den Spalt Schmutz eindringen, der zu größerer Reibung und zu einer Zerstörung der Gleitflächen führt. Die Einfederung des Lagerfederelementes unter der Fahrzeugradlast darf nicht zu groß sein. Trotzdem muß es ausreichend kippweich sein, damit bei Verkippung der Traverse ständig ein vollflächiges Anliegen des Federlagerelements gegen die Gleitfläche der Traverse gewährleistet ist.

Da das bekannte Federlagerelement aber nicht kippweich genug ist, kann es diese Anforderungen nicht erfüllen. Wird ein derartiges Federlagerelement exzentrisch belastet, entstehen nur kleine Verformungen in der Gummischicht zwischen den Lagerteilen und das Rückstellmoment ist entsprechend groß. Bei in der Praxis häufig auftretenden größeren Kippwinkeln hebt die Traverse vom Federlagerelement ab.

Der Erfindung liegt daher die Aufgabe zugrunde, eine Vorrichtung zur Einspannung einer Traverse der eingangs genannten Art so auszubilden, daß ein großer Traversenkippwinkel aufgenommen werden kann, wobei möglichst kleine Rückstellmomente entstehen sollen. Eine elastische Auflagerung soll zwar vorhanden sein, unter den sich aus den Fahrzeugradlasten ergebenden Druckkräften soll jedoch keine zu große Einfederung erfolgen. Das Lager soll ferner einfach im Aufbau und daher preiswert sowie einbau- und wartungsgünstig gestaltet sein.

Die Erfindung löst diese Aufgabe mit den Merkmalen des kennzeichnenden Teils des Anspruchs 1. Weitere vorteilhafte Ausführungsformen und Weiterbildungen der Erfindung sind Gegenstand der Unteransprüche.

Es wirkt somit das als Rotationskörpersegment ausgebildete erste Lagerteil mit dem als Lagerpfanne ausgebildeten zweiten Lagerteil über die die beiden miteinander verbindende Gummischicht zusammen, indem eine exzentrische vertikale Belastung des Lagers eine in radialer Richtung wirkende Kraftkomponente und damit Druckspannungen hervorruft, die kein Drehmoment um die Rotationsachse erzeugen, und eine tangentiale Krafthonysonente die eine Verdrehung des Rotationskörpersegmentes bewirkt und an der Oberfläche des Rotationskörpersegmentes angreifende Schubspannungen erzeugt, die ein vergleichsweise geringes Rückstellmoment um die Achse des Rotationskörpersegmentes ergeben. Berechnungen und Versuche haben ergeben, daß beim Vergleich der Rückstellmomente der bekannten und der erfindungsgemäßen Konstruktion ein vom gewählten Radius abhängiger Faktor erreicht wird, der z. B. den Wert 5 erreichen kann, das heißt, daß durch das erfindungsgemäße Lager wesentlich größere Kippwinkel aufgenommen werden können, ohne daß die Traverse von dem Lager abhebt. Wenn die beiden zu vergleichenden Konstruktionen eine gleichgroße exzentrische Kraft erfahren, dann entsteht bei der erfindungsgemäßen Ausgestaltung eine Schubverformung des Gummis anstelle einer Druck- oder Zugverformung der Gummischicht bei herkömmlichen Lagern, wodurch sich ein kleineres Rückstellmoment ergibt.

Eine mögliche konkrete Ausführungsform der Federlagerkörper ist durch das Merkmal des Anspruchs 2 gegeben. Die kugelige Ausbildung des oberen, das heißt des ersten Lagerteils, hat den Vorteil, daß eine Schubbewegung in sämtliche Richtungen stattfinden kann.

Eine bevorzugte Ausführungsform ist jedoch durch die walzensegmentförmige Ausbildung des ersten Lagerteils gegeben. Die Herstellung vereinfacht sich, und da das Walzsegment so ausgerichtet ist, daß eine Längsachse parallel zu den Lamellen liegt, sind die Verhältnisse mit denen der kugeligen Ausführungsform vergleichbar.

In den Ansprüchen 4 und 5 werden weitere alternative Ausführungsformen der Erfindung beschrieben.

So eignet sich die Ausführungsform gemäß Anspruch 5 insbesondere für große Druckkräfte.

Es wird weiterhin festgehalten, daß die Position der Lagerteile auch vertauscht sein kann. Dadurch ergibt sich, daß der Drehmittelpunkt oder Krümmungsmittelpunkt entweder auf der Oberseite oder oberhalb der Traverse oder auf der Unterseite bzw. unterhalb der Traverse liegt.

Das Federlagerelement weist zusätzlich einen weiteren Vorteil auf. Im Gegensatz zu den bekannten Kugelkalottenlagern mit Gleitflächen ist die Herstellung wesentlich einfacher, die Lagerteile können als Schmiede- oder Gußteile hergestellt werden, ohne hochwertige Oberflächen und ohne die Einhaltung enger Toleranzen, wie sie bei den Kugelkalottenlagern erforderlich sind.

Zur Arretierung der Federelemente an dem Traversenkasten weisen diese in einer Lagerfläche eine Sackbohrung zur Aufnahme eines separaten Zapfens auf, auf deren Boden eine elastische Schicht angeordnet ist. Der Arretierungszapfen wird nach Einbau des Federelements in einer Bohrung im Bodenblech des Traversenkastens aufgenommen. Der Zapfen wird vor dem Einbau gegen die Federkraft der elastischen Schicht, die aus Moosgummi bestehen kann, in die Bohrung hineingedrückt, so daß die freie Stirnfläche des Zapfens bündig mit der Lagerfläche abschließt. Dann wird das Federelement in dem Raum zwischen der Unterseite der Traverse und dem Bodenblech des Traversenkastens geschoben, bis der Zapfen über der Bohrung im Bodenblech des Kastens angelangt ist. Dann senkt er sich durch den Federdruck des Moosgummis und das eigene Gewicht in die Bohrung im Kasten. Somit ist eine formschlüssige Verbindung hergestellt. Diese Ausführung der Arretierungsvorrichtung hat gegenüber bekannten Vorrichtungen den entscheidenden Vorteil, daß die obere Feder beim Einsetzen des unteren Lagers weniger eingefedert werden muß.

Die Erfindung wird im folgenden anhand von Zeichnungen dargestellt und näher erläutert. Es zeigen:

Fig. 1 Schnitt durch eine Fahrbahnüberbrückungskonstruktion in schematischer Darstellung;

Fig. 2 einen Querschnitt eines Federlagerelements;

Fig. 3 einen Querschnitt eines Federlagerelemts orthogonal zum Querschnitt aus Fig. 1;

Fig. 4 eine Draufsicht des Federlagerelements gemäß den Fig. 2 und 3;

Fig. 5 den Arretierungsbereich zwischen Federlagerelement und Traversenkasten in leicht vergrößerter Darstellung und im Schnitt, und

Figs. 6-11 alternative Ausführungsformen des Federlagerelements.

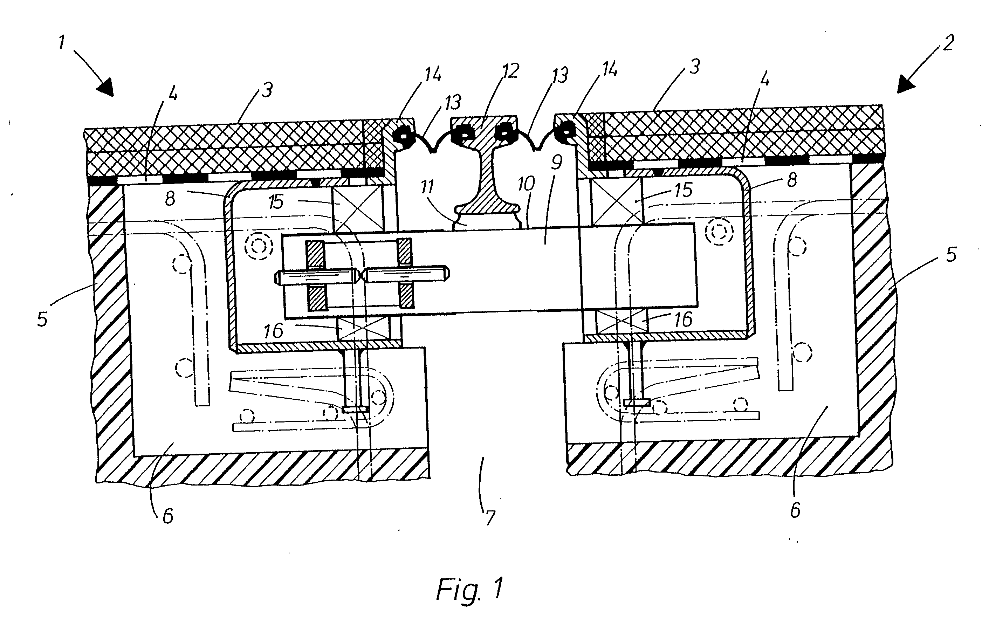

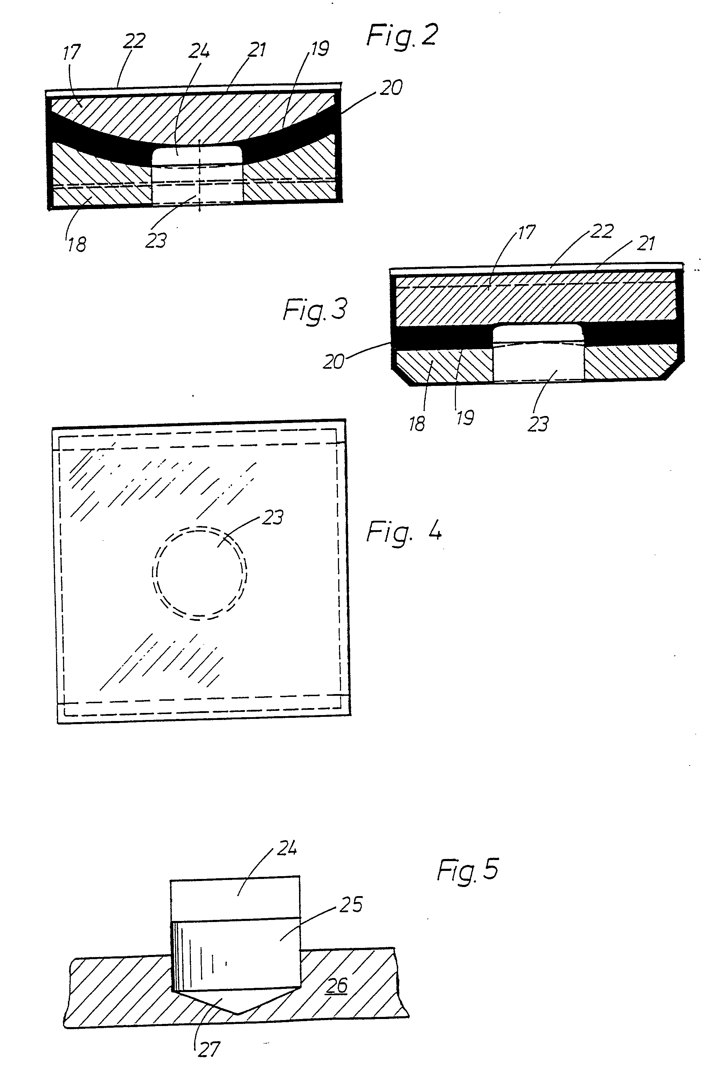

In der Fig. 1 ist der Fahrbahnüberbrückungsbereich dargestellt. In der Zeichnung links ist der widerlagerseitige Teil 1 und rechts der brückenseitige Teil 2 dargestellt. Mit dem Bezugszeichen 3 ist der jeweilige Fahrbahnbelag bezeichnet. Der Belag 3 ruht auf einer Isolierung 4 und dieser auf einer Betonschicht 5. In den sich gegenüberstehenden Betonschichten 5 ist jeweils ein Hohlraum 6 vorgesehen. Die Fahrbahnteile1 und 2 sind durch einen Spalt voneinander getrennt. In die Hohlräume 6 ist jeweils eine Hälfte eines Traversenkastens 8 eingesetzt und befestigt. In die Hälften des Traversenkastens 8 reicht je ein Ende einer Traverse 9, die den Spalt 7 überbrückt. Mittig auf der Oberseite 10 der Traverse 9 ist ein Verbindungsstück 11 für eine Lamelle 12 angeordnet. Die Oberseite der Lamelle 12 schließt bündig mit der Fahrbahnoberfläche 3 ab. Elastische Bandprofile 13 verbinden die Lamelle 12 mit Klauenschenkelprofilen 14 an den Kanten der Fahrbahn 3. Die Traverse 9 wird in jeder Hälfte des Traversenkastens 8 mit an ihrer Ober- und Unterseite anliegenden Federlagerelementen 15 und 16 gehalten. Das obere Federlagerelement 15 wird im folgenden als Gleitfeder und das untere Federlagerelement 16 als Gleitlager bezeichnet. Das Gleitlager 16 ist genauer in den Fig. 2 bis 5 dargestellt. Die Fig. 2 und 3 zeigen zueinander orthogonale Schnitte des Federlagers 16, das aus zwei Lagerteilen 17 und 18 aufgebaut ist. Das Lagerteil 17 ist als Walzensegment ausgebildet und das Lagerteil 18 als komplementäre Lagerpfanne. Beide Lagerteile 17 und 18 sind durch eine aufvulkanisierte Gummischicht 19 miteinander verbunden, die sich als dünner Belag 20 um das Gleitlager 16 herum fortsetzt. Auf der oberen planen Seite 21 des Lagerteils 17 ist eine Gleitschicht 22 aus PTFE angeordnet. Mittig im unteren Lagerteil 18, der Lagerpfanne, ist eine Sackbohrung 23 vorgesehen, die in der Gummischicht 19 endet. Am Boden der Bohrung 23 ist eine Schicht Moosgummi 24 angeordnet. Die Bohrung 23 dient zur Aufnahme eines Zapfens 25, wie er in Fig. 5 dargestellt ist. Dieser Zapfen 25 wird durch die elastische Moosgummischicht 24 nach richtiger Positionierung des Gleitlagers 16 zwischen der Traverse 9 und dem Bodenblech 26 des Traversenkastens 8 in eine im Bodenblech 26 vorhandene Aussparung oder Öffnung 27 gedrückt, wodurch Gleitlager 16 und Kasten 8 formschlüssig miteinander verbunden sind.

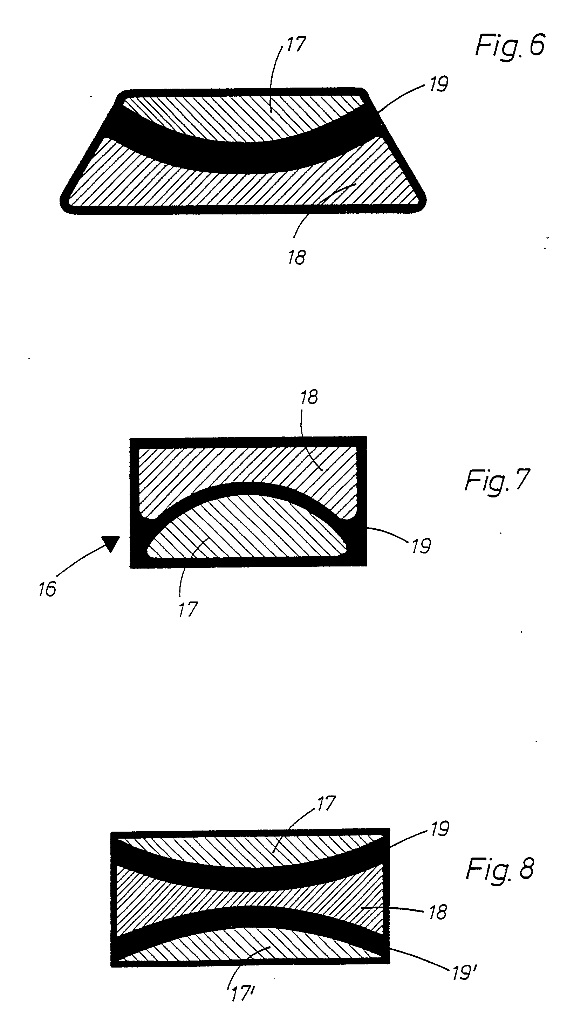

In der Fig. 6 ist eine alternative Ausführungsform des Gleitlagers 16 dargestellt, wobei aus Übersichtlichkeitsgründen wie bei allen weiteren Fig. die Sackbohrung 23 fortgelassen wurde. Dieses Gleitlager weist im Querschnitt Trapezform auf.

Die Fig. 7 zeigt ein Gleitlager 16, wobei im Gegensatz zu Fig. 2 die Position der Lagerteile 17 und 18 vertauscht ist.

In der Fig. 8 ist eine weitere Variante des Gleitlagers 16 dargestellt. Hier weist die Lagerpfanne 18 eine im Querschnitt bikonkave Form auf. Zwei Lagerteile 17 bzw. 17′ schmiegen sich in die konkaven Flächen der Lagerpfanne 18, nur durch die Gummischichten 19, 19′ von ihr getrennt.

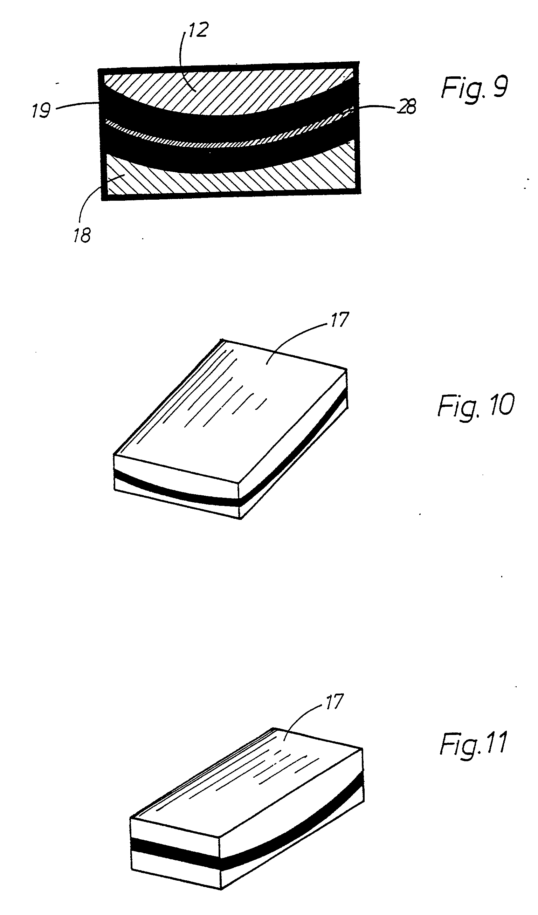

Die Fig. 9 erinnert an die Fig. 2, nur daß bei diesem Ausführungsbeispiel in die die Lagerteile 17 und 18 trennende Gummischicht 19 eine Stahlplatte 28 eingebettet ist, die sich parallel zu den gekrümmten Oberflächen der Lagerteile 17 und 18 erstreckt. In den Fig. 10 und 11 schließlich ist dargestellt, daß die Lagerteile 17 sowohl Kugelsegmente (Fig. 10) als auch Walzensegmente (Fig. 11) sein können.

Beim Einbau einer Traverse 9 wird nun wie folgt verfahren:
Zunächst wird die Gleitfeder 15 eingesetzt, wobei ein an der Gleitfeder befestigter, nicht dargestellter Zapfen in eine Bohrung des Deckenblechs des Traversenkastens 8 eingeführt wird. Dann wird die Traverse 9 nach oben gedrückt und die Gleifeder 15 soweit eingefedert bis das Gleitlager 16 zwischen Traverse 9 und Bodenblech 26 des Traversenkastens geschoben werden kann, wobei der Zapfen 25 unter Zusammenpressen der Moosgummifeder 24 vollkommen in der Bohrung 23 des unteren Lagerteils 18 aufgenommen wird. Dann verschiebt man das Gleitlager 16 soweit, bis der Zapfen 25 in die Bohrung 27 des Bodenblechs 26 des Traversenkastens einrastet. Genauso wird mit dem anderen Ende der Traverse 9 verfahren.

## Ansprüche

1 .Vorrichtung zur federnden Einspannung von wenigstens einer Traverse (9) mit jeweils einer darauf gelagerten Lamelle (12) einer Fugenüberbrückungskonstruktion, insbesondere von Fahrbahnen in einen Traversenkasten (8), mit zwischen dem Deckenblech bzw. dem Bodenblech und den jeweiligen Traversenenden angeordneten Federlagerelementen (15,16), **dadurch gekennzeichnet**, daß wenigstens die zwischen dem Bodenblech des Traversenkastens (8) und der Traversenunterseite eingespannten Federlagerkörper (16) zwei Lagerteile (17, 18) aufweisen, welche jeweils in eine sie vollständig umschließende und sie miteinander verbindende Gummischicht (19,20) einvulkanisiert sind und von denen mindestens eines (17) als Rotationskörpersegment und das ihm zugeordnete Lagerteil (18) als komplementäre Lagerpfanne ausgebildet sind.

2. Vorrichtung nach Anspruch 1, **dadurch gekennzeichnet**, daß das Rotationskörpersegment ein Kugelsegment ist.

3. Vorrichtung nach Anspruch 1, **dadurch gekennzeichnet**, daß das Rotationskörpersegment ein Walzensegment ist, wobei die Walzenlängsachse quer zur Traverse (9) verläuft.

4. Vorrichtung nach Anspruch 1 und einem der Ansprüche 2 oder 3, **dadurch gekennzeichnet**, daß die Lagerpfanne (18) im Querschnitt bikonkav ausgebildet ist und beidseitig der Lagerpfanne je ein Rotationskörpersegment vorgesehen sind.

5. Vorrichtung nach Anspruch 1 und einem der Ansprüche 2 oder 3, **dadurch gekennzeichnet**, daß in der die beiden Lagerhälften (17,18) verbindenden Gummischicht (19) eine dem Verlauf der sich gegenüberliegenden Segmentflächen folgende Verstärkung (28) eingebettet ist.

6. Vorrichtung nach Anspruch 5, **dadurch gekennzeichnet**, daß die Verstärkung (28) von einer Metallplatte gebildet ist.

7. Vorrichtung nach wenigstens einem der vorstehenden Ansprüche, **dadurch gekennzeichnet**, daß die den Traversen (9) zugewandten Oberflächen der Federlagerkörper (16) mit einem Gleitmittel (22) beschichtet sind.

8. Vorrichtung nach Anspruch 7, **dadurch gekennzeichnet**, daß das Gleitmittel (22) PTFE ist.

9. Vorrichtung nach wenigstens einem der vorstehenden Ansprüche, **dadurch gekennzeichnet**, daß wenigstens eine der Unterkanten der Federlagerkörper (16) angefast ist.

10. Vorrichtung nach wenigstens einem der vorstehenden Ansprüche, **dadurch gekennzeichnet**, daß die die Lagerteile umschließende Gummischicht (29) an den Seiten des Federlagerkörpers (16) erheblich dicker als an der Ober-bzw. Unterseite des Federlagerkörpers (16) ist.

11. Vorrichtung nach wenigstens einem der vorstehenden Ansprüche, **dadurch gekennzeichnet**, daß die die Lagerteile miteinander verbindende Gummischicht (19) des Federlagerkörpers (16) in ihrer Shorehärte und Dicke entsprechend der gewünschten Steifigkeit des Federlagerkörpers (16) gewählt ist.

12. Vorrichtung nach wenigstens einem der vorstehenden Ansprüche, **dadurch gekennzeichnet**, daß die Krümmungsra dien und/oder die Lage der Krümmungsmittelpunkte der Federlagerkörper derart gewählt sind, daß bei Kippungen der Traverse eine Relativverschiebung zwischen der Traverse und dem Lager klein gehalten ist.

13. Vorrichtung nach wenigstens einem der vorstehenden Ansprüche, **dadurch gekennzeichnet**, daß die Federlagerkörper auf der der Taverse (9) abgewandten Seite eine zentrale Sackbohrung (23) aufweisen und daß in die zentrale Sackbohrung (23) ein Haltezapfen (25) flächenbündig eingesetzt ist, der im Einsetzvorgang des Federlagerkörpers (16) in eine entsprechende Sackbohrung (27) im Traversenkasten (8) eingreift und den Federlagerkörper gegen Verrutschen fixiert.

14. Vorrichtung nach Anspruch 13, **dadurch gekenzeichnet**, daß im Inneren der Sackbohrung (23) eine Feder angeordnet ist, die den Haltezapfen (25) in Richtung der Sackbohrung (27) des Traversenkastens (8) belastet.

15. Vorrichtung nach Anspruch 14, **dadurch gekennzeichnet**, daß die Feder von einer Schicht (24) aus elastischem Material gebildet ist.

16. Vorrichtung nach Anspruch 15, **dadurch gekennzeichnet**, daß die Schicht (24) aus Moosgummi ist.

Fig. 1

Fig. 2

Fig. 3

Fig. 4

Fig. 5

Fig. 6

Fig. 7

Fig. 8

Fig. 9

Fig. 10

Fig.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-2 905 888 (WSW)<br>* Insgesamt *<br>--- | 1,3,5,6 ,9 | E 01 D 19/06<br>E 01 D 19/04<br>F 16 F 1/38 |
| Y | GB-A- 878 223 (LEWIS)<br>* Insgesamt *<br>--- | 1,3,5,6 ,9 | |
| A | EP-A-0 169 677 (NITTA IND. CORP.)<br>* Zusammenfassung; Figuren *<br>--- | 1,2 | |
| A | EP-A-0 145 667 (HONEL)<br>* Seite 6, Zeilen 1-5; Figur 2 *<br>--- | 1,7,8 | |
| A | DE-A-2 302 008 (RECRIDO)<br>* Insgesamt *<br>--- | 1,2,13 | |
| A | CH-A- 428 826 (GLACIER)<br>--- | | |
| A | GB-A-1 586 165 (ANDRE RUBBER CO.)<br>----- | | |

**RECHERCHIERTE SACHGEBIETE (Int. Cl.5)**

E 01 D
F 16 F
E 04 B

Der vorliegende Recherchenbericht wurde für alle Patentansprüche erstellt

| Recherchenort | Abschlußdatum der Recherche | Prüfer |
|---|---|---|
| DEN HAAG | 19-01-1990 | DIJKSTRA G. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
   Dokument

EPO FORM 1503 03.82 (P0403)